# EUROPEAN PATENT APPLICATION

(11) **EP 4 819 542 A1**
(43) Date of publication of application: **07.10.2026**
(21) Application number: 25168607.7
(22) Date of filing: 04.04.2025
(51) Int. Cl.: H04L 9/40

(54) **DYNAMIC OVERLAY NETWORK SYSTEM**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A dynamic overlay network system comprising: a plurality of decoy resources deployed over an existing network infrastructure, the existing network infrastructure comprising one or more host network machines; wherein the plurality of decoy resources is arranged to run in a plurality of containers; the plurality of containers is arranged to run on the one or more host network machines; and containers of the plurality of containers are arranged to communicate with each other whereby to mimic operational network traffic.

## Description

### FIELD

The present disclosure relates to dynamic overlay network systems.

### BACKGROUND

In the field of cybersecurity, detecting, analysing, and mitigating cyberattacks has become a critical challenge for organizations worldwide. Cybercriminals, including hackers, malware developers, and advanced persistent threat (APT) actors, constantly devise sophisticated methods to exploit vulnerabilities in computer systems, networks, and software applications. Consequently, traditional security measures, such as firewalls, intrusion detection systems, and antivirus software, may be insufficient to fully protect against these emerging threats.

To address these challenges, cybersecurity practitioners use decoy hosts and decoy servers, commonly referred to as honeypots, which serve as deceptive targets to attract and engage potential attackers. Deception technology automates the creation of traps (decoys) and lures, which are strategically integrated among existing Information Technology (IT) resources. These decoys provide a layer of protection to thwart attackers who have breached the network. These decoy systems are deliberately designed to appear as legitimate, vulnerable systems or resources within a network, thereby drawing the attention of cybercriminals and enticing them to interact with the system.

A honeypot is a system that intentionally exposes its vulnerabilities, creating an illusion of a legitimate, insecure target, while being closely monitored to capture detailed information about an attacker's activities. A purpose of these honeypots is to provide security researchers and organizations with insights into an attacker's tactics, techniques, and procedures, including the tools and strategies employed during an attack.

The data collected from these decoy systems can provide valuable intelligence for understanding the current threat landscape. This information can be used to improve existing security defences. Additionally, honeypots and decoy servers allow organizations to conduct vulnerability research in a controlled environment, enabling them to develop countermeasures and mitigate risks associated with new attack methods.

A container is a lightweight, portable, and self-contained software unit that includes all the dependencies, libraries, and configuration files required to run a particular application or service. Containers run in virtualised environments thus their contained applications are independent and isolated from other environments. Typically, containers share a host system's operating system (OS) kernel, providing an efficient way to run applications in isolated environments. This shared kernel architecture allows containers to be more lightweight and faster to start, while still maintaining strong isolation between applications and the host system.

Containers can run processes that are isolated from other containers but are visible from the host OS. From the host OS point of view regular and containerised applications need permissions and privileges to access its services.

The container acts as a security boundary between the user/application and the host OS by restricting access to files and processes outside the container unless it has explicitly been given permission.

### SUMMARY

The present inventor has realised that, when implementing conventional deception technologies, an attacker can notice that certain decoy hosts and decoy servers are idle, processes are not really running, there is no actual traffic to the system, and/or no updates to the web server or services are running. Accordingly, the attacker may infer that they are interacting with a decoy overlay network and change or stop their attack.

To address this issue, the present invention provides a dynamic overlay network built on top of an existing network. The dynamic overlay network is provided by the real hosts and servers of the already existing network running actual applications and services inside one or more decoy containers. Within the decoy containers, specific applications, services, and files are provided for the attacker. The specific applications, services, and files that are provided within the decoy containers for the attacker may be selected by an Artificial Intelligence/Machine Learning (Al/ML) component which decides what to provide or run inside the containers based on reconnaissance of the attacker.

Advantageously, the attacker will tend to see normal traffic to the system and other applications running. Within the decoy containers, the attacker will see non-idle systems and a number of hosts. Accordingly, the attacker is given the illusion that they are interacting with a real network.

The invention is defined by the claims.

In a first aspect, there is provided a dynamic overlay network system comprising a plurality of decoy resources deployed over an existing network infrastructure. The existing network infrastructure comprises one or more host network machines. The plurality of decoy resources is arranged to run in a plurality of containers. The plurality of containers is arranged to run on the one or more host network machines. Containers of the plurality of containers are arranged to communicate with each other whereby to mimic operational network traffic.

The dynamic overlay network system may further comprise a network entry point and a monitoring module configured to detect unauthorized or suspicious requests at the network entry point, and to route the detected unauthorized or suspicious requests to the plurality of decoy resources.

The dynamic overlay network system may further comprise a dynamic adaptation engine configured to modify the plurality of decoy resources. The dynamic adaptation engine may be configured to modify the plurality of decoy resources based on the detected unauthorized or suspicious requests. The dynamic adaptation engine may be configured to use Machine Learning to modify the plurality of decoy resources.

One or more of the host network machines may each hosts both an operational application or service and a container of the plurality of containers, the container being arranged to run a decoy resource of the plurality of decoy resources. The one or more of the host network machines may each have two Internet Protocol, IP, addresses associated with it including a first IP address associated with the operational application or service hosted by that host network machine and a second IP address associated with the container hosted by that host network machine.

The dynamic overlay network system may further comprise a data collection module for capturing data from interactions between the plurality of decoy resources and an external entity.

The dynamic overlay network system may further comprise an interface unit configured to provide feedback or alerts to a cybersecurity team based on one or more identified threats, e.g. one or more threats identified by analysing interactions between the plurality of decoy resources and an external entity.

The dynamic overlay network system may further comprise an analysis engine configured to analyse a connection between an external entity and the plurality of decoy resources and to, based on the analysis, create a signature of an attack by the external entity for distribution to other systems.

In a further aspect, there is provided a method for providing cybersecurity using a dynamic overlay network. The method comprises: deploying a plurality of decoy resources over an existing network infrastructure, the existing network infrastructure comprising one or more host machines; running the plurality of decoy resources in a plurality of containers, the plurality of containers running on the one or more host machines; and communicating, by containers of the plurality of containers, with each other whereby to mimic operational network traffic.

The method may further comprise: monitoring, by a monitoring module, a network entry point to detect unauthorized or suspicious requests; and routing, e.g. by the monitoring module or a controller, the unauthorized or suspicious requests to the plurality of decoy resources.

The method may further comprise modifying, by a dynamic adaptation engine using Machine Learning, the plurality of decoy resources based on detected unauthorized or suspicious requests.

The method may further comprise hosting, by a common host network machine of the one or more host network machines, both an operational application or service and a container of the plurality of containers, the container being arranged to run a decoy resource of the plurality of decoy resources, wherein the common host network machine has two Internet Protocol, IP, addresses associated with it including a first IP address associated with the operational application or service hosted by the common host network machine and a second IP address associated with the container hosted by the common host network machine.

In a further aspect, there is provided a non-transitory computer-readable medium storing instructions that, when executed by a processor, cause the processor to: deploy a plurality of decoy resources over an existing network infrastructure, the existing network infrastructure comprising one or more host machines. The plurality of decoy resources is deployed such that the plurality of decoy resources is arranged to run in a plurality of containers. The plurality of containers is arranged to run on the one or more host machines. Containers of the plurality of containers are arranged to communicate with each other whereby to mimic operational network traffic.

### BRIEF DESCRIPTION OF THE FIGURES

Aspects of the present disclosure will now be described by way of example with reference to the accompanying figures. In the figures:
Figure 1 is a schematic illustration of a network; and
Figure 2 is a process flowchart showings certain steps of a cybersecurity method.

### DETAILED DESCRIPTION

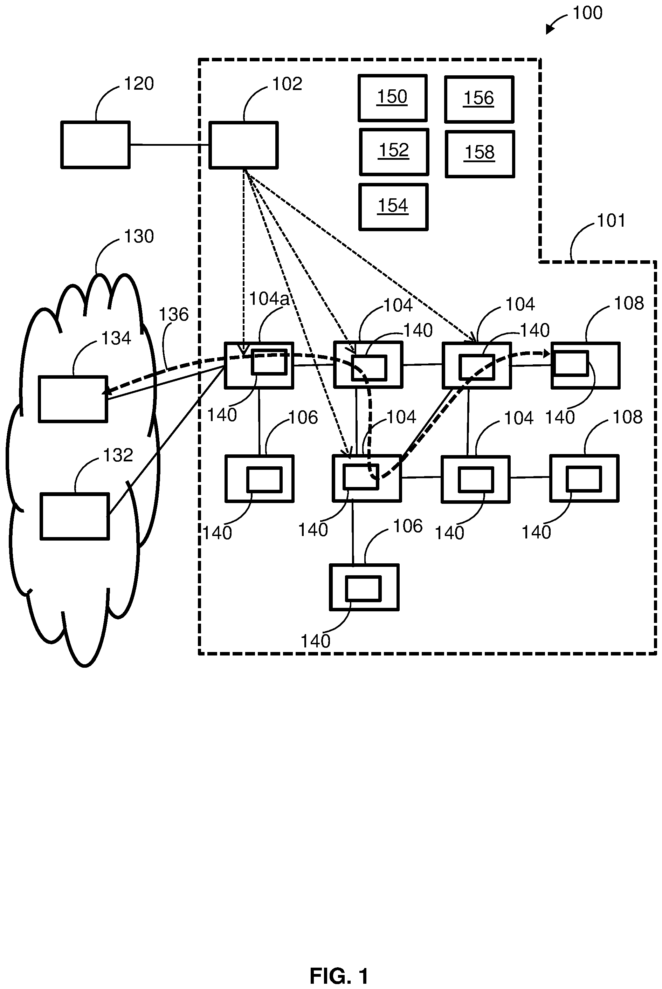

Figure 1 is a schematic illustration of a network 100. The network 100 comprises a network infrastructure 101 on which an example of a dynamic overlay network system is implemented.

In this example, the network infrastructure 101 comprises a controller 102, a plurality of host network machines including a plurality of routers 104 (including a gateway router 104a or network entry point), a plurality of hosts 106 and a plurality of servers 108.

In this example the controller 102 is a software-defined network (SDN) controller. The controller 102 may be provided by one or more processors. The controller 102 is operatively coupled to the routers 104, the hosts 106, and the servers 108. The controller 102 is configured to control operation of the routers 104, the hosts 106, and the servers 108. The controller 102 is further operatively coupled to a network administrator 120 such that data may be sent between the network administrator 120 and the controller 102.

The routers 104, the hosts 106, and the servers 108 are operatively coupled to each other such that network traffic may be routed through the network infrastructure 101 between the routers 104, the hosts 106, and the servers 108.

The gateway router 104a is operatively coupled to the Internet 130 such that an external user 132, for example using external user equipment, may communicate with the gateway router 104a via the Internet 130. The gateway router 104a may be a network access point for the external user 132 to the internal network infrastructure 101 and the services and applications running on the hosts 106 and servers 108.

In this example, a dynamic overlay network system comprises a plurality of decoy resources. The plurality of decoy resources is arranged to run in a plurality of containers 140. The plurality of containers 140 is arranged to run on the one or more host network machines (i.e., the routers 104, the hosts 106, and the servers 108) of the network infrastructure 101. The containers 140 are arranged to communicate with each other whereby to mimic operational network traffic. The decoy resources are configured to mimic legitimate network assets and services. By being contained within containers 140, the plurality of decoy resources is isolated from the legitimate network assets and services provided by the host network machines. The containers 140 may be considered to be decoy containers.

By being connected to the Internet 130, the gateway router 104a may receive communication (such as requests, etc.) from an attacker 134, i.e., a malicious entity.

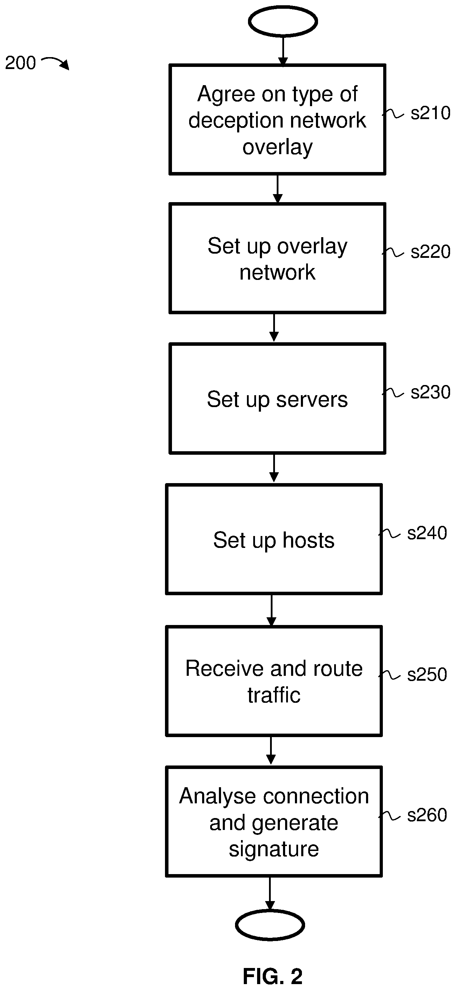

In this example, as described in more detail later below with reference to Figure 2, the dynamic overlay network system is configured to route traffic from the attacker 134 through the containers 140, whereby to allow the attacker 134 to interact with the plurality of decoy resources while isolating the attacker 134 from legitimate network assets and services. The dynamic overlay network routes traffic to and from the attacker 134 through the decoy containers 140, making it look like legitimate network activity. An example of the routing of the traffic to and from the attacker 134 is illustrated in Figure 1 by a dashed arrow and the reference numeral 136.

In this example, the dynamic overlay network system further comprises a monitoring module 150. In some examples, the monitoring module 150 resides in the gateway router 140a. The monitoring module 150 is configured to detect unauthorized or suspicious requests at the network entry point, i.e. the gateway router 140a. The monitoring module 150 is configured to route, e.g. via operation of the controller 102, the detected unauthorized or suspicious requests to the containers 140 and the plurality of decoy resources running thereon. For example, if the gateway router 140a receives port scanning from an external entity (e.g., the attacker 134) or suspicious traffic such as that consistent with a SYN Connect or SYN Flood attack, then the monitoring module 150 may detect this and send information about the source of the suspicious traffic (e.g., an IP source address of the attacker 134) to the controller 102. The controller 102 may then communicate with the host network machines 104, 106, 108 to reconfigure the host network machines 104, 106, 108 to route that traffic through the decoy containers 140.

In this example, the dynamic overlay network system further comprises a dynamic adaptation engine 152. In some examples, the dynamic adaptation engine 152 resides in the controller 102. The dynamic adaptation engine 152 is configured to modify the plurality of decoy resources. The dynamic adaptation engine 152 may be operatively coupled to the monitoring module 150 such that the dynamic adaptation engine 152 is configured to modify the plurality of decoy resources based on the unauthorized or suspicious requests detected by the monitoring module 150.

The dynamic adaptation engine 152 may modify the plurality of decoy resources in real-time. The dynamic adaptation engine 152 may modify the plurality of decoy resources in any appropriate way. For example, the dynamic adaptation engine 152 may dynamically create one or more new decoy resources based on attacker interaction patterns. As another example, the dynamic adaptation engine 152 may reconfigure existing decoy resources to simulate new vulnerabilities or services based on the attacker's tactics, techniques, and procedures. As another example, the dynamic adaptation engine 152 may redirect network traffic toward the decoy resources to engage the attacker, wherein the redirection includes altering routing protocols or DNS responses to steer the attacker towards the decoy resources.

The dynamic adaptation engine may use Machine Learning (ML) to modify the plurality of decoy resources. An ML module may monitor the initial reconnaissance traffic and based on that decide the services and applications that will run inside the containers 140 at the routers 104, hosts 106, and/or servers 108.

In this example, one or more of the host network machines 104, 106, 108 each hosts both an operational application or service and a container 140, the container 140 running a decoy resource. A host network machine may have two Internet Protocol, IP, addresses associated with it. These may include a first IP address associated with the operational application or service hosted by that host network machine 104, 106, 108 and a second IP address associated with the container 140 hosted by that host network machine 104, 106, 108. For example, a host network machine may have two interface cards associated with its two IP addresses. The first IP address and the second IP address of a host network machine may respectively be used for the routing of legitimate network traffic and suspicious network traffic.

In this example, the dynamic overlay network system further comprises one or more data collection modules 154. In some examples, the one or more data collection modules 154 reside in the controller 102, one or more hosts 106, and/or one or more servers 108. The data collection module 154 may be configured to capture data from interactions between the plurality of decoy resources and the attacker 134. The data collection module 154 may be configured to generate reports on attacker behaviour and provide intelligence for security teams.

In this example, the dynamic overlay network system further comprises an interface unit 156, which may be a user interface device. The interface unit 156 is configured to provide feedback or alerts to a cybersecurity team based on one or more identified threats. For example, the interface unit 156 may present a report generated by the data collection module 154.

In this example, the dynamic overlay network system further comprises an analysis engine 158. In some examples, analysis engine 158 resides in the controller 102, one or more hosts 106, and/or one or more servers 108. The analysis engine 158 is configured to analyse a connection between the attacker 134 and the plurality of decoy resources. The analysis engine 158 is further configured to, based on the analysis, create a signature of an attack by the external entity for distribution to other systems such as other networks.

Figure 2 is a process flow chart showing certain steps of an example method 200 of providing cybersecurity. The method 200 comprises setting up or deploying the dynamic overlay network to an existing network infrastructure, and using the dynamic overlay network for deception purposes, i.e. for deceiving an attacker 134.

In this example, the method comprises, at steps s210 to s240, setting up or deploying the dynamic overlay network on or over the existing network infrastructure.

At step s210, network administrator 120 sends, to the controller 102, a message containing information including but not limited to some or all of the following:
- a specification of how complex the network is, such as a specification of the one or more IP addresses of each router 104, host 106, and/or server 108.
- a specification of how many host network machines (i.e. routers 104, hosts 106, and/or servers 108) are connected in the network infrastructure 101.
- a specification of what application set(s) will be allowed to be accessed from the network infrastructure 101 at the hosts 106 (such as word processors, document viewers, etc.) and/or at the servers 108 (such as web applications, databases, etc.)
- a specification of services running at the servers 108.

In this way, a type of dynamic deception network overlay is specified.

At step s220, the controller 102 builds the dynamic overlay network. This may be achieved by the controller 102 contacting the switches in the network. The controller 102 may set up the switches / routers 104 to route traffic over the dynamic overlay network using the IP addresses / VLANs connected to the specific containers 140, e.g. IP addresses at the hosts 106 or servers 108 that are running decoy containers 140. Thus, the dynamic overlay network is set up.

At step s230, the controller 102 sets up the servers 108 in the dynamic overlay network. The servers 108 run respective containers 140 which run therein or provide specific services such as a web servers or databases. The servers 108 know any connection to that container 140 is suspicious as normal traffic will never be forwarded to that container 140. Thus, the servers 108 are set up in the dynamic overlay network.

At step s240, the controller 102 sets up the hosts 106 in the dynamic overlay network. The hosts 106 run respective containers 140 which run therein or provide specific applications, files or services. The hosts 106 know any connection to that container 140 is suspicious as normal traffic will never be forwarded to that container 140. Thus, the hosts 106 are set up in the dynamic overlay network.

Thus, the dynamic overlay network is set up or deployed over the existing network infrastructure. This set up comprises deploying a plurality of decoy resources over the existing network infrastructure, the existing network infrastructure comprising one or more host machines; running the plurality of decoy resources in a plurality of containers, the plurality of containers running on the one or more host machines; and communicating, by containers of the plurality of containers, with each other whereby to mimic operational network traffic.

At step s250, the monitoring agent 150 monitors the gateway router 104a that is the interface between the internal network infrastructure 101 and the Internet 130. In the event that the monitoring agent 150 triggers, i.e. detects the gateway router 104a has received traffic from a suspicious or malicious external entity such as the attacker 134, the monitoring agent 150 may enable the controller 102 to configure the host network machines 104, 106, 108 to forward or route the traffic from that suspicious or malicious external entity to the decoy dynamic overlay network. For example, if the gateway router 104a starts to receive port scanning from the attacker 134, or suspicious traffic like a lot of SYN connect requests, then the monitoring agent 150 will send information about the source of the suspicious traffic (such as the IP address of the attacker 134) to the controller 102. The controller 102 will then reconfigure the routers 104 to forward the attacker's traffic to the decoy containers 140.

Thus, the method may comprise monitoring, by the monitoring module 150, a network entry point to detect unauthorized or suspicious requests, and routing the unauthorized or suspicious requests to the plurality of decoy resources.

At step s260, the analysis engine 158 and/or a sandbox (the analysis engine 158 and/or a sandbox may reside in routers 104, hosts 106, and/or servers 108) detects connection establishment to the decoy containers 140. The analysis engine 158 analyses the connection(s) and/or any files sent or received to automatically create a signature of the attack and/or attacker 134. The analysis engine 158 may send the signature or a notification about the attack signature to the controller 102. The controller may distribute the attack signature or notification to other systems or networks.

Conventional decoy hosts and servers act as honeypots to lure and analyse attacks. However, since these machines are isolated, attackers can quickly discover they have been trapped. The above-described system and method advantageously tends to provide an entire decoy software-defined network (SDN) overlaid on an operational network e.g. SDN. Advantageously, a single machine can host both an operational application/service and a container (i.e., a decoy container) running a decoy application/service. The single machine can for example comprise two network interface cards and thus have two IP addresses associated with it. Decoy containers running on different machines can communicate with each other, mimicking operational SDN traffic. The network entry point can host a monitoring agent to detect suspicious requests and route them to the overlay network, as opposed to routing to the operational network. Machine learning may be used to dynamically reconfigure the decoy SDN to keep the attacker interested.

Advantageously, deploying decoy resources using containerized environments tends to provide scalability and rapid deployment of new decoy resources.

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A dynamic overlay network system comprising:
a plurality of decoy resources deployed over an existing network infrastructure, the existing network infrastructure comprising one or more host network machines; wherein
the plurality of decoy resources is arranged to run in a plurality of containers;
the plurality of containers is arranged to run on the one or more host network machines; and
containers of the plurality of containers are arranged to communicate with each other whereby to mimic operational network traffic.

2. The dynamic overlay network system of claim 1, further comprising:
a network entry point; and
a monitoring module configured to detect unauthorized or suspicious requests at the network entry point, and to route the detected unauthorized or suspicious requests to the plurality of decoy resources.

3. The dynamic overlay network system of any preceding claim, further comprising a dynamic adaptation engine configured to modify the plurality of decoy resources.

4. The dynamic overlay network system of claim 3 when dependent on claim 2, wherein the dynamic adaptation engine is configured to modify the plurality of decoy resources based on the detected unauthorized or suspicious requests.

5. The dynamic overlay network system of claim 3 or 4, wherein the dynamic adaptation engine is configured to use Machine Learning to modify the plurality of decoy resources.

6. The dynamic overlay network system of any preceding claim, wherein one or more of the host network machines each hosts both an operational application or service and a container of the plurality of containers, the container being arranged to run a decoy resource of the plurality of decoy resources.

7. The dynamic overlay network system of claim 6, wherein the one or more of the host network machines each has two Internet Protocol, IP, addresses associated with it including a first IP address associated with the operational application or service hosted by that host network machine and a second IP address associated with the container hosted by that host network machine.

8. The dynamic overlay network system of any preceding claim, further comprising a data collection module for capturing data from interactions between the plurality of decoy resources and an external entity.

9. The dynamic overlay network system of any preceding claim, further comprising an interface unit configured to provide feedback or alerts to a cybersecurity team based on one or more threats identified by analysing interactions between the plurality of decoy resources and an external entity.

10. The dynamic overlay network system of any preceding claim, further comprising an analysis engine configured to analyse a connection between an external entity and the plurality of decoy resources and to, based on the analysis, create a signature of an attack by the external entity for distribution to other systems.

11. A computer-implemented method for providing cybersecurity using a dynamic overlay network, the method comprising:
deploying a plurality of decoy resources over an existing network infrastructure, the existing network infrastructure comprising one or more host network machines;
running the plurality of decoy resources in a plurality of containers, the plurality of containers running on the one or more host network machines; and
communicating, by containers of the plurality of containers, with each other whereby to mimic operational network traffic.

12. The method of claim 11**,** further comprising:
monitoring, by a monitoring module, a network entry point to detect unauthorized or suspicious requests; and
routing the unauthorized or suspicious requests to the plurality of decoy resources.

13. The method of claim 11 or 12, further comprising:
modifying, by a dynamic adaptation engine using Machine Learning, the plurality of decoy resources based on detected unauthorized or suspicious requests.

14. The method of any of claims 11 to 13, further comprising hosting, by a common host network machine of the one or more host network machines, both an operational application or service and a container of the plurality of containers, the container being arranged to run a decoy resource of the plurality of decoy resources, wherein the common host network machine has two Internet Protocol, IP, addresses associated with it including a first IP address associated with the operational application or service hosted by the common host network machine and a second IP address associated with the container hosted by the common host network machine.

15. A non-transitory computer-readable medium storing instructions that, when executed by a processor, cause the processor to:
deploy a plurality of decoy resources over an existing network infrastructure, the existing network infrastructure comprising one or more host network machines; wherein
the plurality of decoy resources is deployed such that the plurality of decoy resources is arranged to run in a plurality of containers;
the plurality of containers is arranged to run on the one or more host network machines; and
containers of the plurality of containers are arranged to communicate with each other whereby to mimic operational network traffic.
